# EUROPEAN PATENT SPECIFICATION

(11) **EP 4 561 004 B1**
(45) Date of publication and mention of the grant of the patent: **08.07.2026**
(21) Application number: 23849009.8
(22) Date of filing: 26.05.2023
(51) Int. Cl.: H04L 41/12, H04W 40/24, H04W 76/11, H04L 41/0894, H04L 41/50

(54) **MESSAGE ROUTING METHOD AND DEVICE**
NACHRICHTENROUTINGVERFAHREN UND -VORRICHTUNG
PROCÉDÉ ET DISPOSITIF DE ROUTAGE DE MESSAGE

(30) Priority: 30.07.2022 CN 202210912571
(43) Date of publication of application: 28.05.2025
(73) Proprietor: Huawei Technologies Co., Ltd., Shenzhen, Guangdong 518129 (CN)
(72) Inventor: YAO, Qi, Shenzhen, Guangdong 518129 (CN); ZONG, Zaifeng, Shenzhen, Guangdong 518129 (CN); ZHANG, Jidong, Shenzhen, Guangdong 518129 (CN)
(74) Representative: Gill Jennings & Every LLP
(86) International application number: PCT/CN2023/096497
(87) International publication number: WO 2024/027299

(56) References cited:
- WO-A1-2020/173137
- WO-A1-2021/001051
- WO-A1-2021/248275
- WO-A1-2022/147048
- CN-A- 112 671 567

## Description

This application claims priority to Chinese Patent Application No. 202210912571.7, filed with the China National Intellectual Property Administration on July 30, 2022 and entitled "MESSAGE ROUTING METHOD AND APPARATUS".

### TECHNICAL FIELD

Embodiments of this application relate to the communication field, and more specifically, to a message routing method and apparatus.

### BACKGROUND

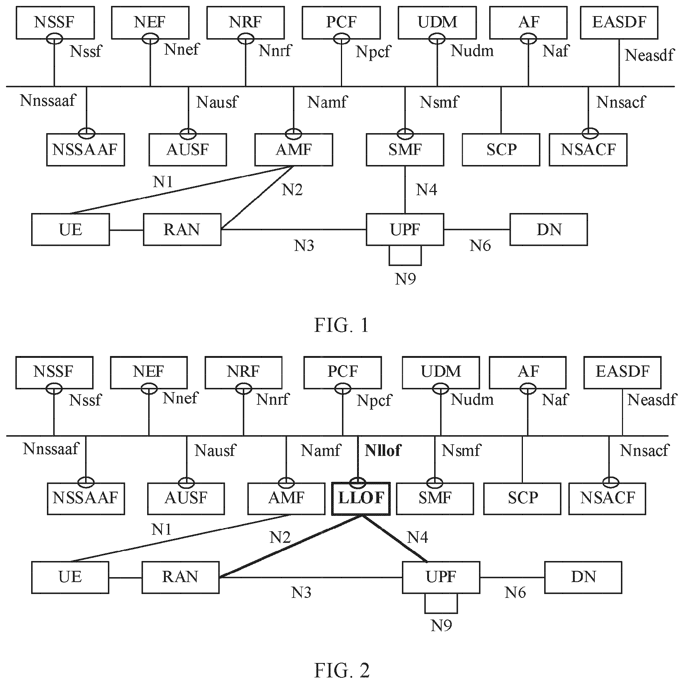

Currently, the 3rd generation partnership project (3rd generation partnership project, 3GPP) has provided a network service-oriented architecture to improve network reliability and resilience. For example, in a 5G network service-oriented architecture shown in FIG. 1, a session management function (session management function, SMF) network element not only needs to support a service-oriented interface (where for example, an interface between the SMF and an access and mobility management function (access and mobility management function, AMF) network element, a policy control management function (policy control function, PCF) network element, or the like is a service-oriented interface), but also needs to support a non-service-oriented interface (where for example, an N4 interface between the SMF and a user plane function (user plane function, UPF) network element is a non-service-oriented interface).

On the non-service-oriented interface, there is a binding relationship between user context and a physical interface. For example, the SMF needs to retain context information of a user or context information associated with a transport layer. In this case, if the SMF is faulty, performance of the UPF is also affected. For example, the UPF may need to re-establish a session with a new SMF, transmit the context information, and so on. In other words, in the current 5G network service-oriented architecture, a service-oriented function of the SMF is incomplete. As a result, there is a coupling relationship between the SMF and the UPF during fault recovery of the SMF or scale-in/scale-out of the SMF. This is not flexible enough and cannot fully utilize advantages of the service-oriented architecture.

In view of this, how to enable the SMF to be completely service-oriented and communicate with the UPF becomes a technical problem that needs to be resolved currently.

WO2021/001051 discloses a system and method in which there is an orchestrator node to indicate the SMF the SF load, so that the SMF can select the target UPF.

WO2022/147048 discloses a system with the 5G architecture in which the communications between the SMF and UPF happen via the N4 interface.

### SUMMARY

Embodiments of this application provide a message routing method, and provide a new network service-oriented architecture including an LLOF. A message may be transmitted between the LLOF and an SMF through a service-oriented interface, and a non-service-oriented interface may be used between the LLOF and a UPF, so that the SMF is completely service-oriented, and the SMF can further communicate with the UPF via the LLOF.

According to a first aspect, a communication method is provided. The method is performed by a link load orchestration function network element.

The method includes: The link load orchestration function network element receives a first message from a session management function network element, where the first message carries information about a user plane function network element and a session message, the first message is for requesting to forward the session message, and the first message is transmitted through a service-oriented interface of the link load orchestration function network element; the link load orchestration function network element determines a target user plane function network element based on the information about the user plane function network element; and the link load orchestration function network element sends the session message to the target user plane function network element through a non-service-oriented interface.

In this application, for example, the session message may be a packet forwarding control protocol PFCP session message.

In a possible implementation, the session message includes an information element IE, and the IE includes a control plane fully qualified session endpoint identifier CP F-SEID corresponding to the session management function network element.

In a possible implementation, before the link load orchestration function network element receives the first message from the session management function network element, the method further includes: The link load orchestration function network element receives a second message from the session management function network element, where the second message is for requesting to obtain the CP F-SEID corresponding to the session management function; the link load orchestration function network element allocates the corresponding CP F-SEID to the session management function network element based on the second message; and the link load orchestration function network element sends the CP F-SEID to the session management function network element.

Based on the foregoing technical solution, in this application, when the LLOF supports parsing a session message header but does not support parsing the IE of the session message, the SMF may first obtain the corresponding session endpoint identifier CP F-SEID from the LLOF in advance, encapsulate the CP F-SEID into the IE of the session message, and send the IE of the session message to the LLOF, so that the LLOF can forward the session message to the target UPF.

In a possible implementation, the CP F-SEID may be allocated by the session management function network element.

Based on the foregoing technical solution, in this application, the SMF may alternatively allocate the CP F-SEID by itself, to be compatible with a conventional technology. In other words, an existing protocol is slightly modified, thereby facilitating an implementation and reducing costs. In addition, the SMF does not need to request, from the LLOF, to obtain the CP F-SEID, so that complexity of a procedure can be reduced.

In a possible implementation, the link load orchestration function network element allocates a corresponding control plane fully qualified session endpoint identifier CP F-SEID to the session management function network element based on the first message, and the link load orchestration function network element encapsulates the CP F-SEID into an information element IE of the session message.

Based on the foregoing technical solution, in this application, the LLOF provides a service of allocating the CP F-SEID, and a binding relationship between the CP F-SEID and the SMF may be dynamically updated. To be specific, if the SMF is faulty, the LLOF may reselect a new SMF, does not need to reallocate the CP F-SEID, and only needs to bind the CP F-SEID to the new SMF, to reduce a communication delay, and ensure user service experience.

In a possible implementation, the method further includes: The link load orchestration function network element stores a mapping relationship between the session management function network element and the CP F-SEID.

Based on the foregoing technical solution, in this application, the LLOF may store the mapping relationship, so that the LLOF can subsequently route a message from the UPF based on the mapping relationship, to implement communication between the SMF and the UPF.

In a possible implementation, the method further includes: The link load orchestration function network element encapsulates the session message. That the link load orchestration function network element sends the session message to the target user plane function network element includes: The link load orchestration function network element sends an encapsulated session message to the target user plane function network element.

For example, the link load orchestration function network element may encapsulate the session message in a format of a protocol stack of an N4 interface.

Based on the foregoing technical solution, in this application, the LLOF may encapsulate the session message, so that the LLOF and the UPF comply with an N4 interface protocol, and the UPF does not need to be modified. This facilitates an implementation and reduces costs.

In a possible implementation, the method further includes: The link load orchestration function network element receives a third message from the target user plane function network element, where the third message carries a session endpoint identifier SEID and a user plane fully qualified session endpoint identifier UP F-SEID. The third message further carries indication information, and the indication information is for responding to the session message. The link load orchestration function network element determines the CP F-SEID based on the SEID, and the link load orchestration function network element sends a fourth message to the session management function network element based on the mapping relationship between the CP F-SEID and the session management function network element, where the fourth message carries the UP F-SEID and the indication information.

In a possible implementation, a header of the third message includes the SEID, and an IE of the third message includes the UP F-SEID.

In a possible implementation, the link load orchestration function network element receives a third message from the target user plane function network element, where an IE of the third message includes a UP F-SEID and the CP F-SEID. The third message further carries indication information, and the indication information is for responding to the session message. The link load orchestration function network element sends a fourth message to the session management function network element based on the mapping relationship between the CP F-SEID and the session management function network element, where the fourth message carries the UP F-SEID and the indication information.

In a possible implementation, the link load orchestration function network element receives a third message from the target user plane function network element, where a header of the third message includes the CP F-SEID. The third message carries indication information, and the indication information is for responding to the session message. The link load orchestration function network element sends a fourth message to the session management function network element based on the mapping relationship between the CP F-SEID and the session management function network element, where the fourth message carries the UP F-SEID and the indication information.

Based on the foregoing technical solution, in this application, the LLOF may route a message from the UPF based on the mapping relationship, that is, determine a target SMF, to implement communication between the SMF and the UPF, and avoid signaling consumption caused when the LLOF sends the message to an incorrect SMF.

According to a second aspect, a message routing apparatus is provided. The apparatus is configured to perform the method according to any one of the possible implementations in the first aspect. Specifically, the apparatus may include a unit and/or a module, for example, a transceiver unit and/or a processing unit, configured to perform the method according to any one of the possible implementations in the first aspect.

In an implementation, the apparatus is a link load orchestration function network element. When the apparatus is a communication device, a communication unit may be a transceiver or an input/output interface, and the processing unit may be at least one processor. Optionally, the transceiver may be a transceiver circuit. Optionally, the input/output interface may be an input/output circuit.

In another implementation, not covered by the scope of the claims, the apparatus is a chip, a chip system, or a circuit used in a link load orchestration function network element. When the apparatus is a chip, a chip system, or a circuit used in a communication device, a communication unit may be an input/output interface, an interface circuit, an output circuit, an input circuit, a pin, a related circuit, or the like of the chip, the chip system, or the circuit, and the processing unit may be at least one processor, a processing circuit, a logic circuit, or the like.

According to a third aspect, a message routing apparatus is provided. The apparatus includes at least one processor, configured to execute a computer program or instructions stored in a memory, to perform the method according to any one of the possible implementations in the first aspect. Optionally, the apparatus further includes the memory, configured to store the computer program or the instructions. Optionally, the apparatus further includes a communication interface, and the processor reads, through the communication interface, the computer program or the instructions stored in the memory.

In an implementation, the apparatus is a link load orchestration function network element.

In another implementation, not covered by the scope of the claims, the apparatus is a chip, a chip system, or a circuit used in a link load orchestration function network element.

This application discloses an unclaimed processor, including an input circuit, an output circuit, and a processing circuit. The processing circuit is configured to: receive a signal by using the input circuit, and transmit the signal by using the output circuit, so that the processor performs the method according to any one of the possible implementations in the first aspect.

In a specific implementation process, the processor may be one or more chips, the input circuit may be an input pin, the output circuit may be an output pin, and the processing circuit may be a transistor, a gate circuit, a trigger, any logic circuit, or the like. An input signal received by the input circuit may be received and input by, for example, but not limited to, a transceiver, a signal output by the output circuit may be output to, for example, but not limited to, a transmitter and transmitted by the transmitter, and the input circuit and the output circuit may be a same circuit, where the circuit is used as the input circuit and the output circuit at different moments. Specific implementations of the processor and the various circuits are not limited in embodiments of this application.

Operations such as sending and obtaining/receiving related to the processor may be understood as operations such as output and receiving or input of the processor, or operations such as sending and receiving performed by a radio frequency circuit and an antenna, unless otherwise specified, or provided that the operations do not contradict actual functions or internal logic of the operations in related descriptions. This is not limited in this application.

A processing device, not covered by the scope of the claims, is disclosed, and includes a processor and a memory. The processor is configured to read instructions stored in the memory, and may receive a signal via a transceiver, and transmit the signal via a transmitter, to perform the method according to any one of the possible implementations in the first aspect.

Optionally, there are one or more processors, and there are one or more memories.

Optionally, the memory may be integrated with the processor, or the memory is disposed separately from the processor.

In a specific implementation process, the memory may be a non-transitory (non-transitory) memory, for example, a read-only memory (read-only memory, ROM). The memory and the processor may be integrated into one chip, or may be separately disposed on different chips. A type of the memory and a manner of disposing the memory and the processor are not limited in embodiments of this application.

It should be understood that a related data exchange process such as sending indication information may be a process of outputting the indication information from the processor, and receiving capability information may be a process of receiving input capability information by the processor. Specifically, data output by the processor may be output to the transmitter, and input data received by the processor may be from the transceiver. The transmitter and the transceiver may be collectively referred to as a transceiver.

The processing device may be one or more chips. The processor in the processing device may be implemented by using hardware, or may be implemented by using software. When the processor is implemented by using hardware, the processor may be a logic circuit, an integrated circuit, or the like. When the processor is implemented by using software, the processor may be a general-purpose processor, and is implemented by reading software code stored in the memory. The memory may be integrated into the processor, or may be located outside the processor and exist independently.

According to a fourth aspect, a computer-readable storage medium is provided. The computer-readable storage medium stores program code to be executed by a device, and the program code is for performing the method according to any one of possible implementations in the first aspect.

An unclaimed computer program product including instructions is provided. When the computer program product runs on a computer, the computer is enabled to perform the method according to any one of the possible implementations in the first aspect.

An unclaimed chip system is provided, and includes a processor, configured to: invoke a computer program from a memory and run the computer program, so that a device on which the chip system is installed performs the method according to any one of the implementations in the first aspect.

According to a fifth aspect, a communication system is provided. The communication system includes a link load orchestration function network element. The link load orchestration function network element is configured to perform the method according to any one of the possible implementations in the first aspect.

In a possible implementation, the communication system further includes a session management function network element and a user plane function network element.

### BRIEF DESCRIPTION OF DRAWINGS

FIG. 1 is a diagram of a 5G network service-oriented architecture;
FIG. 2 is a diagram of a 5G network service-oriented architecture according to this application;
FIG. 3 is a diagram of a protocol stack of an N4 interface;
FIG. 4 is a diagram of a format of a PFCP session message;
FIG. 5 is a diagram of a format of a PFCP session message header;
FIG. 6 is a diagram of a format of a PFCP session message information element;
FIG. 7 is a schematic flowchart of a message routing method 700 according to this application;
FIG. 8 is a schematic flowchart of another message routing method 800 according to this application;
FIG. 9 is a schematic block diagram of a message routing apparatus 100 according to this application; and
FIG. 10 is a schematic block diagram of another message routing apparatus 200 according to this application.

### DESCRIPTION OF EMBODIMENTS

The following describes technical solutions of embodiments in this application with reference to the accompanying drawings.

A wireless communication system in this application includes but is not limited to a global system for mobile communications (global system for mobile communications, GSM), a long term evolution (long term evolution, LTE) frequency division duplex (frequency division duplex, FDD) system, an LTE time division duplex (time division duplex, TDD) system, an LTE system, a long term evolution-advanced (LTE-Advanced, LTE-A) system, a next generation communication system (for example, a 6G communication system), a system integrating a plurality of access systems, or an evolved system.

The technical solutions provided in this application may be further applied to machine type communication (machine type communication, MTC), a long term evolution for machines (long term evolution for machines, LTE-M) technology, a device-to-device (device-to-device, D2D) network, a machine-to-machine (machine-to-machine, M2M) network, an internet of things (internet of things, IoT) network, or another network. The IoT network may include, for example, an internet of vehicles. Communication modes in an internet of vehicles system are collectively referred to as vehicle to X (vehicle to X, V2X, where X can stand for everything). For example, the V2X may include vehicle-to-vehicle (vehicle-to-vehicle, V2V) communication, vehicle-to-infrastructure (vehicle-to-infrastructure, V2I) communication, vehicle-to-pedestrian (vehicle-to-pedestrian, V2P) communication, or vehicle-to-network (vehicle-to-network, V2N) communication.

FIG. 1 is a diagram of a 5G system (5th generation system, 5GS) network service-oriented architecture. The network architecture may specifically include the following network elements.
1. A user equipment (user equipment, UE) may be referred to as a terminal device, an access terminal, a subscriber unit, a subscriber station, a mobile station, a remote station, a remote terminal, a mobile device, a user terminal, a terminal, a wireless communication device, a user agent, or a user apparatus.

The terminal device may be a device that provides a user with voice/data. For example, the terminal device may be a handheld device or a vehicle-mounted device having a wireless connection function. Currently, some examples of the terminal device are: a mobile phone (mobile phone), a tablet computer, a notebook computer, a palmtop computer, a mobile internet device (mobile internet device, MID), a virtual reality (virtual reality, VR) device, an augmented reality (augmented reality, AR) device, a wireless terminal in industrial control (industrial control), a wireless terminal in self-driving (self-driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a terminal device in a 5G network, or a terminal device in a future evolved public land mobile network (public land mobile network, PLMN). This is not limited in embodiments of this application.

By way of example but not limitation, in embodiments of this application, the terminal device may alternatively be a wearable device. The wearable device may also be referred to as a wearable intelligent device, and is a general term of a wearable device that is intelligently designed and developed for daily wear by using a wearable technology, for example, glasses, gloves, a watch, clothes, and shoes. The wearable device is a portable device that can be directly worn on a body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement all or some of functions without depending on smartphones, for example, smart watches or smart glasses, and include devices that are dedicated to only one type of application function and need to collaboratively work with other devices such as smartphones, for example, various smart bands or smart jewelry for monitoring physical signs.

In addition, the terminal device in embodiments of this application may alternatively be a terminal device in an IoT system. An IoT is an important part of future development of information technologies. A main technical feature of the IoT is connecting a thing to a network by using a communication technology, to implement an intelligent network for interconnection between a person and a machine or between things.

It should be noted that the terminal device and an access network device may communicate with each other by using an air interface technology (for example, an NR technology or an LTE technology). Terminal devices may also communicate with each other by using an air interface technology (for example, the NR technology or the LTE technology).

In embodiments of this application, an apparatus configured to implement a function of the terminal device may be a terminal device, or may be an apparatus, for example, a chip system or a chip, that can support the terminal device in implementing the function. The apparatus may be installed in the terminal device. In embodiments of this application, the chip system may include a chip, or may include a chip and another discrete component.

2. A (radio) access network ((radio) access network, (R)AN) device may provide a function of accessing a communication network for an authorized user in a specific area, and may specifically include a wireless network device in a 3rd generation partnership project (3rd generation partnership project, 3GPP) network, or may include an access point in a non-3GPP (non-3GPP) network.

The RAN device may use different radio access technologies. Currently, there are two types of radio access technologies: a 3GPP access technology (for example, a radio access technology used in a 3rd generation (3rd generation, 3G) system, a 4th generation (4th generation, 4G) system, or a 5G system) and a non-3GPP (non-3GPP) access technology. The 3GPP access technology is an access technology that complies with a 3GPP standard specification. For example, an access network device in the 5G system is referred to as a next generation node base station (next generation Node Base station, gNB) or a RAN device. The non-3GPP access technology may include an air interface technology represented by an access point (access point, AP) in wireless fidelity (wireless fidelity, Wi-Fi), a worldwide interoperability for microwave access (worldwide interoperability for microwave access, WiMAX) technology, or a code division multiple access (code division multiple access, CDMA) technology. The AN device may allow interconnection and interworking performed between the terminal device and a 3GPP core network by using the non-3GPP technology.

The RAN device can be responsible for functions such as radio resource management, quality of service (quality of service, QoS) management, and data compression and encryption on an air interface side. The AN device provides an access service for the terminal device, to complete forwarding a control signal and user data between the terminal device and the core network.

The RAN device may include but is not limited to a macro base station, a micro base station (also referred to as a small cell), a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (baseband unit, BBU), an AP in a Wi-Fi system, a wireless relay node, a wireless backhaul node, a transmission point (transmission point, TP), a transmission reception point (transmission reception point, TRP), or the like; may be a gNB or a transmission point (TRP or TP) in the 5G (for example, NR) system, or one antenna panel or a group (including a plurality of antenna panels) of antenna panels of a base station in the 5G system; or may be a network node constituting a gNB or a transmission point, for example, a distributed unit (distributed unit, DU), or a base station in a next generation 6G communication system. A specific technology used by the AN device and a specific device form of the AN device are not limited in embodiments of this application.
3. A user plane function (user plane function, UPF) network element may be used for packet routing and forwarding, quality of service (quality of service, QoS) processing on user plane (user plane, UP) data, or the like. User data may be transmitted to a data network (data network, DN) via the network element. In embodiments of this application, the user plane function network element may be configured to implement a function of a user plane network element.
4. The data network (data network, DN) is for providing a network for data transmission, for example, an operator service network, the internet (Internet), or a third-party service network.
5. A network slice-specific authentication and authorization function (network slice-specific authentication and authorization function, NSSAAF) network element supports using an authentication, authorization and accounting (authentication, authorization and accounting, AAA) server to perform specific identity authentication and authorization on a specified network slice. If the AAA server belongs to a third party, the NSSAAF may contact the AAA server via an AAA proxy. The network slice-specific authentication and authorization function network element supports accessing an SNPN by using a credential of the AAA server. If a credential holder belongs to a third party, the NSSAAF may contact the AAA server via the AAA proxy.
6. An authentication server function (authentication server function, AUSF) network element supports authenticating the UE for a requester network element, providing a key material for the requester network element, and protecting a "guide information list" of the requester network element.
7. An access and mobility management function (access and mobility management function, AMF) network element is mainly used for mobility management, access management, and the like, and may be configured to implement a function other than a session management function in mobility management entity (mobility management entity, MME) functions, for example, a function such as terminal mobility management, terminal registration and deregistration, terminal session access, allowed slice access selection of the terminal, lawful interception, or access authorization (or authentication). In embodiments of this application, the access and mobility management function network element may be configured to implement a function of an access and mobility management network element.
8. A session management function (session management function, SMF) network element is mainly used for session management, IP address allocation and management of the terminal device, user plane function selection and management, policy control, termination of a charging function interface, downlink data notification, or the like. In embodiments of this application, the session management function network element may be configured to implement a function of a session management network element.
9. A service communication proxy (service communication proxy, SCP) is responsible for message routing of a service-oriented interface between control plane (control plane, CP) network elements. For example, the control plane network elements include network elements such as the AMF, the SMF, the AUSF, and the PCF.
10. A network slice admission control function (network slice admission control function, NSACF) network element may support monitoring and controlling a quantity of registered users in each network slice, support monitoring and controlling a quantity of protocol data unit (protocol data unit, PDU) sessions established in each network slice, and support event-based network slice status notification and report to another network element.
11. A network slice selection function (network slice selection function, NSSF) is used for network slice selection.
12. A network capability exposure function (network exposure function, NEF) network element is configured to securely expose, to the outside, service and capability information (for example, a terminal location and a network congestion status) provided by a 3GPP network function network element.
13. A network repository function (network repository function, NRF) network element is configured to provide new functions of registration and discovery, so that network elements can discover each other and communicate with each other through an application programming interface (application programming interface, API).
14. A policy control (policy control function, PCF) network element is a unified policy framework for guiding a network behavior, and provides a service policy, charging policy information, and the like for a control plane function network element (for example, the AMF network element or the SMF network element).
15. A unified data management (unified data management, UDM) is used for user identifier processing, authentication access, registration, mobility management, or the like.
16. An application function (application function, AF) network element is configured to provide a service, perform application-affected data routing, access the network exposure function network element, exchange service data with the PCF network element to perform policy control, or the like.
17. An edge application server discovery (edge application server discovery function, EASDF) network element is a new network element EASDF that assists in edge application server (edge application server, EAS) discovery, and a main function of the edge application server discovery function network element is to process a domain name system (domain name system, DNS) message based on an indication of the SMF. For example, the function is reporting the DNS message to the SMF, adding an extended mechanisms for DNS (extended mechanisms for DNS, EDNS) client subnet option (client subnet option) (extended mechanisms for DNS client subnet option, which may also be referred to as "ECS option" for short) to a DNS query (query), forwarding the DNS query to a DNS server, and forwarding a DNS response (response) to the UE.

In the architecture shown in FIG. 1, for example, the AMF and the SMF support both a service-oriented interface and a non-service-oriented interface. The "service-oriented interface" may be understood as an interface externally exposed by a functional entity through service registration and service discovery of a service-oriented architecture. The interface is only for a single functional entity. A related functional entity interacts with another functional entity externally through the service-oriented interface, and the another functional entity interacts with the functional entity through the interface exposed by the functional entity. In other words, this mechanism provides a "many-to-one" access mechanism. In addition, because service registration and service discovery are used, each other can access each other without knowing each other's address. This mechanism enables communication between network elements to function like a service alignment function rather than a serial link. This helps reduce dependency between interfaces and facilitates independent expansion of the network elements. Therefore, flexibility of a service of the service-oriented network architecture is improved. The "non-service-oriented interface" may be understood as a conventional interface based on a reference point, to be specific, an interface that is mutually agreed on between two different function network elements for mutual access. On the non-service-oriented interface, there is a binding relationship between user context and a physical interface.

For example, to support SMF fault processing, for each UE registered with the SMF, the SMF needs to send an SMF set (set) identifier (ID) and/or information about a backup SMF corresponding to the UE to another peripheral network element (for example, a UPF) that has a relationship with the UE. When the another network element detects that the SMF is faulty, the network element may reselect an SMF from an SMF set based on the SMF set ID, to continue to provide a service for the UE, or the network element may reselect the backup SMF based on the information about the backup SMF, to continue to provide a service for the UE. For another example, even if the SMF has provided a backup mechanism, when an SMF serving a UE is faulty, even if a new SMF may be reselected to provide a service for the UE, because the old SMF is faulty, context information may fail to be transmitted to the newly selected SMF. In this case, the UPF may need to re-establish a session with the new SMF, and transmit the context information. This increases a communication delay, affects user service experience, and so on.

For still another example, an N26 interface is an interface between a 4G core network (that is, a mobility management entity (mobility management entity, MME)) and a 5G core network (that is, the AMF), and is used for a handover or redirection operation between 4G and 5G. If the AMF in the 5G core network supports the N26 interface, a RAN may fall back through handover or redirection, to use a voice service.

In other words, in the current 5G network service-oriented architecture, a service-oriented function of the SMF (or the AMF) is incomplete. As a result, there is a coupling relationship between the SMF (or the AMF) and another network element during fault recovery of the SMF (or the AMF) or scale-in/scale-out of the SMF. This is not flexible enough and cannot fully utilize advantages of the service-oriented architecture.

In view of this, in this application, the 5G network service-oriented architecture in FIG. 1 is improved, to obtain a new service-oriented architecture shown in FIG. 2. Compared with FIG. 1, a function network element is newly added in FIG. 2. For example, the newly added function network element may be referred to as a link load orchestration function (link load orchestration function, LLOF) network element. For example, an interface between the LLOF and a UPF is an N4 interface, and an interface between an SMF and the LLOF is a service-oriented interface. Therefore, in this application, a non-service-oriented N4 interface between the SMF and the UPF may be shielded, so that a service-oriented function of the SMF can be completely implemented. Optionally, an interface between the LLOF and a RAN is an N2 interface, so that a non-service-oriented N2 interface between an AMF and the RAN can be shielded. Optionally, an interface between the LLOF and an MME is an N26 interface, so that a non-service-oriented N26 interface between the AMF and the MME can be shielded.

The "shielding" in this application may also be understood as follows: For example, there may still be an N4 interface between the SMF and the UPF, but the SMF may not use the N4 interface to communicate with the UPF. Alternatively, it may be understood as that there is still an N2 interface between the AMF and the RAN, but the AMF may not use the N2 interface to communicate with the RAN. Alternatively, it may be understood as that there is still an N26 interface between the AMF and the MME, but the AMF may not use the N26 interface to communicate with the MME.

In other words, compared with the existing service-oriented architecture in FIG. 1, this application provides a new service-oriented architecture. The LLOF is added to the architecture, and the LLOF may terminate a non-service-oriented interface, for example, may terminate the N2 interface, the N4 interface, and the N26 interface. To be compatible with the existing service-oriented architecture, the interface between the UPF and the LLOF, the interface between the RAN and the LLOF, and the interface between the MME and the LLOF are still based on the existing non-service-oriented interfaces. The service-oriented interface may be used between the LLOF and a control plane network element (for example, the AMF or the SMF). In this way, the AMF or the SMF no longer needs to support the non-service-oriented interface. This facilitates decoupling between the AMF or the SMF and another network element, facilitates scale-in/scale-out of the AMF or the SMF, and simplifies an implementation of the AMF or the SMF.

In this application, the LLOF may provide one or more of the following services:
(1) The LLOF provides a service-oriented interface Nllof, and the control plane network element (for example, the AMF or the SMF) may request, through the service-oriented interface, the LLOF to provide a service. For example, the SMF may send a hypertext transfer protocol (hypertext transfer protocol, HTTP) request message to the LLOF, to request to invoke a service of the LLOF.
(2) The LLOF terminates a stream control transmission protocol (stream control transmission protocol, SCTP) link of the N2 interface.
(3) The LLOF is responsible for processing a network element-level NG interface application protocol (NG application protocol, NGAP) message of the N2 interface. The network element-level NGAP message is a message for performing network element configuration, and an NG interface is an interface between the RAN and a core network. A message of the NG interface may be, for example, NG setup, RAN configuration update, or AMF configuration update.
(4) The LLOF terminates processing of a packet forwarding control protocol (packet forwarding control protocol, PFCP) node-level message (where for example, the node-level message includes a message related to PFCP association) on the N4 interface, is responsible for reliable retransmission of a PFCP session message, and is responsible for encapsulation or decapsulation of an internet protocol (Internet protocol, IP) header and a user datagram protocol (user datagram protocol, UDP) header of the PFCP session message.
(5) The LLOF is responsible for reliable retransmission of a GPRS tunneling protocol-control plane (GPRS tunneling protocol-control plane, GTP-C) message and encapsulation and decapsulation of an IP header and a UDP header of the GTP-C message.
(6) The LLOF is responsible for routing user-level N2, N4, and GTP-C messages.
(7) The LLOF is responsible for message routing of the service-oriented interface (for example, an interface between the SMF and AMF or an interface between the AMF and a UDM).
(8) The LLOF is responsible for allocating a route identifier. The route identifier is for determining a control plane network element that processes a message. For example, the route identifier may be an NGAP UE ID of the N2 interface, a session endpoint identifier (session endpoint identifier, SEID) of the N26 interface, a tunneling endpoint identifier (tunneling endpoint identifier, TEID), or an SEID of the N4 interface.
(9) The LLOF is responsible for maintaining a binding relationship. The binding relationship may be a correspondence between context of a UE and an NF instance.
(10) The LLOF is responsible for health status detection and disaster recovery processing of a network element (for example, the AMF or the SMF).
(11) The LLOF is responsible for scale-in/scale-out of a network element (for example, the AMF or the SMF).
(12) The LLOF is responsible for load sharing and overload control of a network element (for example, the AMF or the SMF).

It should be noted that, in this application, the newly added function network element can provide one or more of the foregoing services, but a specific name of the newly added function network element may not be limited. In the following descriptions, only an example in which the name of the network element is the LLOF is used for description.

In this application, a new service-oriented architecture in which the LLOF communicates with the SMF through the service-oriented interface, and the LLOF communicates with the UPF through the N4 interface is provided, and the N4 interface between the SMF and the UPF may be shielded. In this case, how the SMF communicates with the UPF becomes a technical problem that needs to be resolved.

It should be understood that the architecture shown in FIG. 2 is merely an example of a network architecture that can be applied to embodiments of this application, and the network architecture applicable to embodiments of this application is not limited thereto. Any network architecture that can implement functions of the foregoing network elements is applicable to embodiments of this application.

In the network architectures shown in FIG. 1 and FIG. 2, the network elements may communicate with each other through the interfaces shown in the figures. For example, as shown in FIG. 1, an N1 interface is a reference point between the terminal device and the AMF. An N2 interface is an interface between the RAN and the AMF network element, and is configured to send a radio parameter, non-access stratum (non-access stratum, NAS) signaling, and the like. An N3 interface is an interface between the RAN and the UPF network element, and is configured to transmit user plane data, and the like. An N4 interface is an interface between the SMF network element and the UPF network element, and is configured to transmit information such as a service policy, tunnel identification information about an N3 connection, data buffer indication information, and a downlink data notification message. The N4 interface is a reference point between the SMF and the UPF, and is configured to transmit information such as the tunnel identification information of the N3 connection, the data buffer indication information, and the downlink data notification message. An N6 interface is a reference point between the UPF and the DN, and is configured to transmit user plane data, and the like. An N9 interface is a reference point of the UPF.

It should be understood that names of the interfaces between the network elements in FIG. 1 and FIG. 2 are merely examples, and the interfaces may have other names in a specific implementation. This is not specifically limited in this application. In addition, names of messages (or signaling) transmitted between the foregoing network elements are merely examples, and do not constitute any limitation on functions of the messages.

It should be further understood that functions or network elements such as the AMF, the SMF, and the LLOF shown in FIG. 1 and FIG. 2 may be understood as network elements configured to implement different functions. For example, the network elements may be combined into a network slice as required. These network elements may be independent devices, or may be integrated into a same device to implement different functions, or may be network elements in a hardware device, or may be software functions running on dedicated hardware, or may be instantiated virtualization functions on a platform (for example, a cloud platform). Specific forms of the network elements are not limited in this application.

It should be further understood that the foregoing names are defined merely for distinguishing between different functions, and should not constitute any limitation on this application. This application does not exclude a possibility of using other names in a 6G network and another future network. For example, in the 6G network, some or all of the foregoing network elements may still use terms in 5G, or may use other names.

In the service-oriented architecture shown in FIG. 1, non-service-oriented interfaces are still used for some interfaces in the 5G network. For example, the N4 interface that is between the SMF and the UPF and that needs to transmit a large quantity of services and a large amount of policy information has relatively complex logic, and a non-service-oriented interface of a PFCP protocol is usually used for the interface. The N4 interface is an interface between the SMF and UPF. A control plane uses the PFCP protocol to transmit a node-level message and a session-level message. A user plane uses a GPRS tunneling protocol for the user plane (GPRS tunneling protocol for the user plane, GTP-U) to transmit a packet that the SMF needs to receive or send via the UPF.

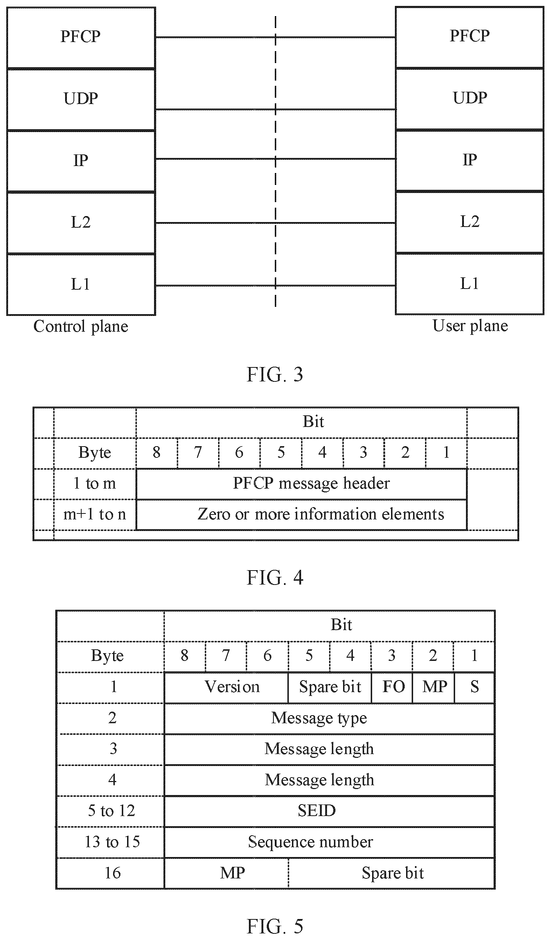

FIG. 3 shows a protocol stack of an N4 interface. As shown in FIG. 3, the protocol stack includes a PFCP layer, a UDP layer, an IP layer, an L2 layer (namely, a data link layer), and an L1 layer (physical layer) from top to bottom.

FIG. 4 shows a format of a PFCP session message. As shown in FIG. 4, the PFCP session message may have n (which is an integer greater than 0) bytes, and each byte has 8 bits (bits). A byte #1 to a byte #m are a PFCP session message header (PFCP message header) (where in this application, the "PFCP session message header" is also referred to as a "PFCP session message header"), and a byte #(m+1) to a byte #n are zero or more information elements (information elements, IEs). For specific descriptions, refer to chapter 7.2.1 in the technical specification (technical specification, TS) 29.244.

FIG. 5 specifically shows a format of a PFCP session message header. As shown in FIG. 5, the PFCP session message header may have 16 bytes (where n is an integer greater than 0), and each byte also has 8 bits. A bit #1 in a first byte is an "S" flag, and the flag indicates whether a session endpoint identifier (session endpoint identifier, SEID) field exists in the PFCP session message header. If the "S" flag is set to "0", the SEID field cannot be present in the PFCP header. If the "S" flag is set to "1", the SEID field should follow a length field in a unit of a byte #5 to a byte #12 (eight bytes in total). A value of the "S" flag should be set to "1" in all PFCP session messages except for a node-related message. When S = 1, this field may clearly identify a session endpoint in a receiving packet forwarding control entity. A bit #2 represents a "message priority (message priority, MP)" flag. If the "MP" flag is set to 1, a 5th bit to an 8th bit of a byte #16 may indicate a message priority. A bit #3 indicates a "follow open (follow open, FO)" flag. If the "FO" flag is set to "1", another PFCP session message is followed in a UDP packet or an IP packet (for details, refer to sections 6.5 and 7.2.1A in TS 26.244). A bit #4 and a bit #5 are spare (spare) bits. If a sending entity sets the bit #4 and the bit #5 to 0, a receiving entity should ignore the bit #4 and the bit #5. A bit 6 to a bit 8 represent a PFCP version (version). A current version is 1. The version should be set to 1 in a decimal format ("001"). A byte #2 represents a message type (message type). A byte #3 and a byte #4 are a two-byte message length. The byte #5 to the byte #12 are optional SEID fields, and may occupy 8 bytes. A byte #13 to a byte #15 are a sequence number. The last byte #16 is a spare byte (for example, the 5th bit to the 8th bit may indicate a message priority). Specifically, for descriptions of the PFCP session message header, refer to chapter 7.2.2 in TS 29.244.

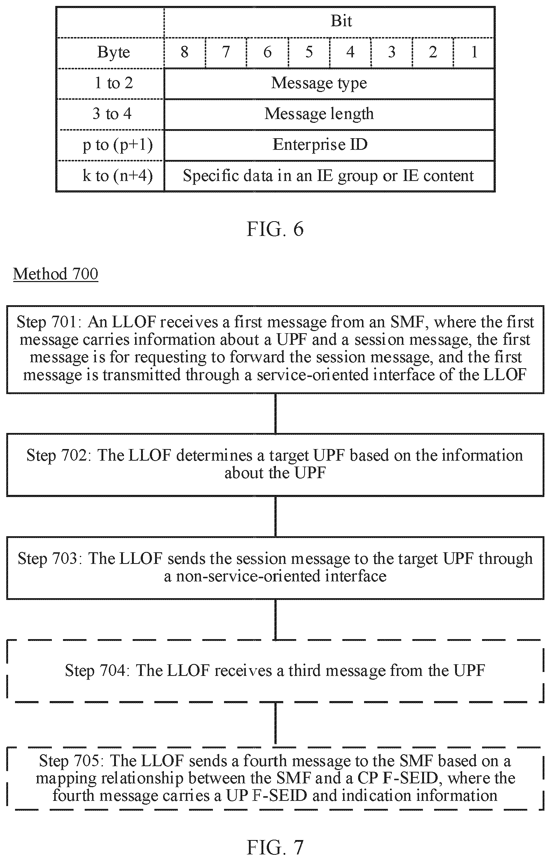

FIG. 6 shows a format of an IE of a PFCP session message. As shown in FIG. 6, first two bytes indicate a message type. For example, a value range of an IE type defined in 3GPP is 0 to 32767, but a range of the IE specified by a vendor is 32768 to 65535. A byte #3 and a byte #4 indicate a message length. An enterprise (enterprise) ID field is optional. Finally, a field of specific data in an IE group or IE content is further included.

For example, the IE includes a control plane fully qualified session endpoint identifier (fully qualified session endpoint identifier, F-SEID). It should be noted that the F-SEID included in the IE is not completely the same as an SEID in a header. The F-SEID includes the SEID and an IP address. The "IP address" may be understood as an IP address of a network element that allocates the SEID. For example, in a conventional technology, the IP address may be understood as an IP address of an SMF. In this application, the IP address herein may be understood as an IP address of an LLOF. In other words, the LLOF may also obtain the F-SEID based on the SEID and the IP address of the LLOF. Optionally, the F-SEID may alternatively be consistent with the SEID. This is not limited in this application.

For another example, the IE further includes creating a packet detection rule (packet detection rule, PDR), updating a data detection rule, creating a forwarding action rule (forwarding action rule, FAR), creating a usage reporting rule (usage reporting rule, URR), creating a QoS enforcement rule (QoS enforcement rule, QER), forwarding a parameter (forwarding parameter), and duplicating a parameter (duplicating parameter). For a format and specific descriptions of the IE, refer to chapter 7.5 in TS 29.244.

FIG. 7 is a schematic flowchart of a message routing method 700 according to this application. The following describes steps shown in FIG. 7. It should be noted that steps represented by dashed lines in FIG. 7 are optional, and are not repeated in subsequent descriptions. The method includes the following steps.

Step 701: An LLOF receives a first message from an SMF, where the first message carries information about a UPF and a session message, the first message is for requesting to forward the session message, and the first message is transmitted through a service-oriented interface of the LLOF.

In this application, the session message may be a PFCP session message. The information about the UPF may be address information of the UPF, for example, an IP address or a fully qualified domain name (fully qualified domain name, FQDN). Alternatively, the information about the UPF may be parameter information of the UPF, for example, a data network name (data network name, DNN) and/or slice information. Alternatively, the information about the UPF may be, for example, a UP F-SEID.

Optionally, the session message includes an information element IE, and the IE includes a CP F-SEID corresponding to the SMF. Specifically, in a possible implementation, the CP F-SEID may be allocated by the SMF. In another possible implementation, the CP F-SEID may be obtained by the SMF from the LLOF. Alternatively, it may be understood as that the CP F-SEID may be allocated by the LLOF. Specifically, before step 701, the SMF may send a second message to the LLOF, where the second message is for requesting to obtain the CP F-SEID corresponding to the SMF. After receiving the second message, the LLOF allocates the CP F-SEID to the SMF, and sends the CP F-SEID to the SMF.

Optionally, the session message does not include the CP F-SEID corresponding to the SMF. In this case, after receiving the first message, the LLOF may allocate the corresponding CP F-SEID to the SMF, and encapsulate the CP F-SEID into the information element IE of the session message.

In this application, the LLOF may further store a mapping relationship between the SMF and the CP F-SEID.

Alternatively, the "mapping relationship" in this specification may also be expressed as an "association relationship" or a "correspondence".

It should be noted that in this application, "B corresponding to A" may be understood as that "there is an association relationship between A and B", "there is a correspondence between A and B", or "there is a mapping relationship between A and B". In this application, "B corresponding to A" indicates that A may be determined based on B. However, it should be further understood that determining A based on B does not mean that A is determined based only on B, and A may be further determined based on B and/or other information.

Step 702: The LLOF determines a target UPF based on the information about the UPF.

For example, the LLOF may determine the target UPF based on the address information of the UPF. In an implementation, the LLOF queries a corresponding UPF based on FQDN information of the UPF. For another example, the LLOF may select the target UPF based on the parameter information of the UPF. In an implementation, the LLOF selects a corresponding UPF based on the DNN and slice selection assistance information, to determine the IP address of the UPF.

Step 703: The LLOF sends the session message to the target UPF through a non-service-oriented interface. Correspondingly, the UPF receives the session message from the LLOF.

For example, the LLOF may encapsulate the session message, and send an encapsulated session message to the target UPF.

Optionally, the method further includes: step 704: The LLOF receives a third message from the UPF.

In a possible implementation, a header of the third message includes an SEID, an IE of the third message includes the UP F-SEID, and the third message further carries indication information. The third message may be the session message, for example, the PFCP session message.

The UP F-SEID may be allocated by the UPF based on the received session message. For example, the UPF may allocate the corresponding UP F-SEID based on a name of the session message. The indication information is for responding to the session message. For example, if the UPF accepts the IE of the session message, the UPF may store the CP F-SEID and N4 rules that are included in the session message, and send the third message to the LLOF, where the third message includes "success" indication information. If the UPF accepts only some of the N4 rules, or if the UPF accepts no N4 rule, the third message sent by the UPF to the LLOF includes "error cause" (which may also be understood as "cause value") indication information. It should be noted that the LLOF may obtain a CP F-SEID based on the SEID and an IP address of the LLOF (where the CP F-SEID is the CP F-SEID corresponding to the SMF in step 701), or the SEID is equal to the F-SEID. This is not limited in this application.

In another possible implementation, an IE of the third message includes the UP F-SEID and the CP F-SEID, and the third message further carries indication information.

In still another possible implementation, a header of the third message includes the CP F-SEID, and the third message further carries indication information.

In this application, for example, the third message may be transmitted through the non-service-oriented interface.

Optionally, the method further includes: step 705: The LLOF sends a fourth message to the SMF based on the mapping relationship between the SMF and the CP F-SEID, where the fourth message carries the UP F-SEID and the indication information.

After receiving the third message sent by the UPF, the LLOF may determine the CP F-SEID. As described above, the CP F-SEID may be included in the IE or the header, and the LLOF obtains the CP F-SEID by parsing the IE or the header. Alternatively, the LLOF determines the CP F-SEID based on the SEID. This is not limited in this application.

As described above, in this application, because the LLOF stores the mapping relationship between the SMF and the CP F-SEID, after the LLOF determines the CP F-SEID, the LLOF may determine the target SMF based on the mapping relationship, and forward the indication information and the UP F-SEID to the target SMF.

In this application, for example, the fourth message may be transmitted through the service-oriented interface.

Based on the foregoing technical solutions, this application provides a new network service-oriented architecture including an LLOF. A message may be transmitted between the LLOF and an SMF through a service-oriented interface, and a non-service-oriented interface may be used between the LLOF and a UPF, so that the SMF is completely service-oriented, and the SMF can further communicate with the UPF via the LLOF.

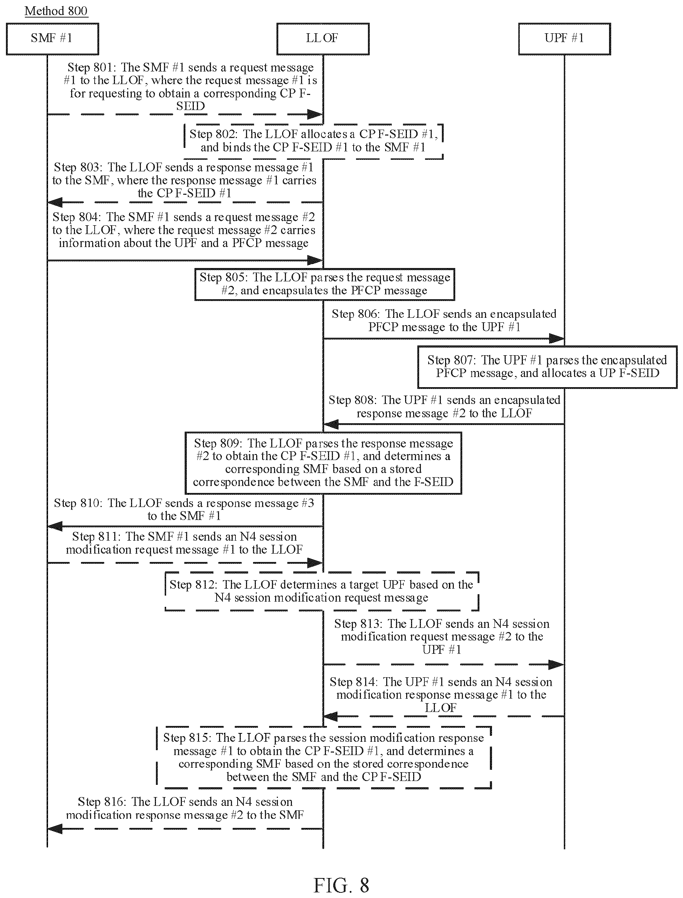

FIG. 8 is a schematic flowchart of another message routing method 800 according to this application. In this embodiment, an example in which a session message is a PFCP message is used for description. In this embodiment, an example in which an SMF is an SMF #1 is used for description, and an example in which a UPF is a UPF #1 is used for description.

In this application, in a possible implementation, an LLOF supports parsing and encapsulating a PFCP session message header, but does not support parsing or encapsulating an IE of the PFCP session message. In another possible implementation, an LLOF not only supports parsing and encapsulating a PFCP session message header, but also supports parsing and encapsulating an IE of the PFCP session message. The following describes the technical solutions of this application for these cases.

### Case (1)

It is assumed that the LLOF supports parsing and encapsulating the PFCP session message header, but does not support parsing or encapsulating the IE of the PFCP session message. In this case, step 801 to step 803 may be performed.

Optionally, in step 801, the SMF #1 sends a request message #1 to the LLOF, where the request message #1 is for requesting to obtain a corresponding CP F-SEID. Correspondingly, the LLOF receives the request message #1 from the SMF.

In this application, the request message #1 may be transmitted through a service-oriented interface of the LLOF. For example, the request message #1 may be a request message encapsulated in an HTTP format.

In this application, the LLOF provides a service of allocating the CP F-SEID to the SMF. For example, the service may be defined as Nilof_Fseid_allocation. It may also be understood as that in this application, the LLOF has a capability of allocating the CP F-SEID to the SMF, or the LLOF supports allocating the CP F-SEID to the SMF.

For example, the SMF #1 may invoke the service of allocating the CP F-SEID by the LLOF, to request the LLOF to allocate the corresponding CP F-SEID to the SMF #1. For example, the SMF #1 may send the request message #1 to the LLOF, where the request message #1 is for requesting, from the LLOF, to obtain the CP F-SEID corresponding to the SMF #1.

Optionally, before requesting the LLOF to allocate the corresponding CP F-SEID to the SMF #1, the SMF #1 may first determine a target LLOF. In other words, the SMF may determine an LLOF to which the request message #1 is sent. In a possible implementation, the SMF may determine the target LLOF based on configuration information or a domain name system (domain name system, DNS) query, or in another manner. In another possible implementation, the SMF may first select a UPF, and the SMF determines the target LLOF based on the selected UPF. For example, the SMF determines the UPF based on information such as a data network name (data network name, DNN) and/or a network slice (for example, single network slice selection assistance information (single network slice selection assistance information, S-NSSAI)). Some UPFs support only internet protocol version 4 (IPv4 (version 4)), some UPFs support only IPv6, and different LLOFs correspond to different IP versions. Therefore, the SMF may determine the target LLOF based on an IP version supported by the selected UPF, so that the selected LLOF can be compatible with the IP version supported by the UPF.

Optionally, in step 802, the LLOF allocates a CP F-SEID #1, and binds the CP F-SEID #1 to the SMF #1.

For example, after the LLOF receives the request message #1, the service of allocating the corresponding CP F-SEID by the LLOF may be triggered.

In a possible implementation, after allocating the CP F-SEID, the LLOF may store a correspondence between the SMF and the CP F-SEID.

In another possible implementation, the LLOF may pre-store a correspondence between the SMF and the CP F-SEID. For example, the correspondence may be configured on the LLOF before delivery. For another example, the correspondence may be obtained by the LLOF from another network element. This is not limited.

Specifically, for example, the LLOF may store a correspondence between one or more SMFs and the CP F-SEID. For example, the correspondence may be expressed in a form of a table, as shown in Table 1 below. In Table 1, the SMF #1 corresponds to the F-SEID #1, an SMF #2 corresponds to an F-SEID #2, and an SMF #3 corresponds to an F-SEID #3.

**Table 1**

| SMF index | CP F-SEID index |
|---|---|
| SMF #1 | CP F-SEID #1 |
| SMF #2 | CP F-SEID #2 |
| SMF #3 | CP F-SEID #3 |
| ... | ... |

In this application, the LLOF not only provides the service of allocating the CP F-SEID, but also supports a function of modifying the correspondence between the SMF and the CP F-SEID. For example, assuming that the SMF #1 is faulty, the LLOF may modify a correspondence between the SMF #1 and the CP F-SEID #1. For example, the LLOF may bind the CP F-SEID #1 to the SMF #2.

In this application, the LLOF may further store SMF session context information. Therefore, if an SMF is faulty, the LLOF may select another SMF, and send the session context information to the newly selected SMF, so that the SMF can continue to perform a session-related operation. For example, it is assumed that the SMF #2 is bound to the CP F-SEID #2. If the SMF #2 is faulty, the LLOF may select the SMF #3 to continue to perform the session-related operation. In this case, the LLOF may modify a correspondence between the SMF #2 and the CP F-SEID #2 in Table 1, to be specific, modify the correspondence to a correspondence between the SMF #3 and the CP F-SEID #2.

In a conventional technology, an SMF may allocate a CP F-SEID. If an SMF is faulty, a new SMF needs to re-allocate the CP F-SEID to a session, and the faulty SMF cannot transmit session context information to the newly selected SMF. Therefore, the newly selected SMF restarts an operation related to session establishment. As a result, communication delay is long, and user service experience is severely affected.

Therefore, compared with the conventional technology, in a new network service-oriented architecture including the LLOF provided in this application, when an SMF is faulty, the LLOF may select a new SMF to provide a service for a session, thereby reducing a communication delay and ensuring user service experience.

Optionally, in step 803, the LLOF sends a response message #1 to the SMF #1, where the response message #1 carries the CP F-SEID #1.

For example, the response message #1 may be transmitted through a service-oriented interface between the SMF #1 and the LLOF. Specifically, the response message #1 may be encapsulated in an HTTP format for transmission.

It should be understood that, step 801 to step 803 are technical solutions in which the SMF #1 requests the LLOF to allocate the CP F-SEID. In this application, the SMF may alternatively allocate the CP F-SEID by itself. In this case, step 801 to step 803 may not be performed.

### Case (2)

It is assumed that the LLOF not only supports parsing and encapsulating the PFCP session message header, but also supports parsing and encapsulating the IE of the PFCP session message. In this case, step 801 to step 803 may not be performed, and step 804 may be directly performed.

Step 804: The SMF #1 sends a request message #2 to the LLOF, where the request message #2 carries information about the UPF and the PFCP session message, and the request message #2 is for requesting to forward the PFCP session message. Correspondingly, the LLOF receives the request message #2 from the SMF #1.

For the case (1), the PFCP session message carries the IE, and the IE includes the CP F-SEID #1 corresponding to the session management function network element.

For the case (2), because the PFCP session message header does not include a corresponding CP F-SEID, subsequently, after receiving the request message #2, the LLOF parses the IE, and finds that the IE does not include the CP F-SEID corresponding to the SMF #1. In this case, the LLOF may allocate a corresponding CP F-SEID #1 to the SMF #1, and encapsulate the CP F-SEID #1 into the IE.

In addition, for the case (2), because the LLOF supports parsing and encapsulating the IE, in a possible implementation, different PFCP request messages may be for defining different service names. For example, Nllof_PFCP message_transfer is defined to transmit the PFCP session message (to be specific, transmit an N4 message between the SMF and the UPF). For another example, an Nllof_NGAP message_transfer service is defined by the LLOF to transmit an NGAP message (to be specific, an N2 message between an NG-RAN and an AMF). For still another example, Nllof_GTP-C message_transfer is defined to transmit a GTP-C message (to be specific, an N26 message between an AMF and an MME). It may also be understood as that the LLOF has a capability of forwarding a message for the SMF, or the LLOF supports forwarding a message for the SMF. For example, the LLOF may forward a request message #4 for the SMF by using Nllof_PFCP message_transfer. In another possible implementation, the LLOF may still define a same service name to unify various PFCP request messages. For example, the LLOF provides a message forwarding service by using a same service name Nllof_message _transfer. In this case, the LLOF needs to further define service parameters in the message, so that different interface message types can be distinguished based on the service parameters. If the LLOF uses the same service name Nllof_message_transfer, 30 service parameters need to be defined. For example, a parameter #1 to a service parameter #10 may indicate that the service is for transmitting the N4 message between the SMF and the UPF. For another example, a parameter #11 to a service parameter #20 may indicate that the service is for transmitting the N2 message between the NG-RAN and the AMF. For another example, a parameter #21 to a service parameter #30 may indicate that the service is for transmitting the N26 message between the AMF and the MME.

In this application, the request message #2 may be transmitted through the service-oriented interface of the LLOF. For example, the request message #2 may be a message encapsulated in an HHTP format.

In a possible implementation, the information about the UPF may be for selecting a target UPF. For example, the information about the UPF may be address information of the UPF and/or parameter information of the UPF. The address information of the UPF may be, for example, information such as IP address information of the UPF or a fully qualified domain name (fully qualified domain name, FQDN). The parameter information of the UPF may be, for example, a data network name (data network name, DNN) or network slice selection assistance information (network slice selection assistance information, NSSAI). For example, the LLOF may select the target UPF based on the parameter information of the UPF, and determine an IP address of the UPF. In another possible implementation, the information about the UPF may be understood as a UP F-SEID allocated by the UPF to a session. It should be understood that, in this application, the CP F-SEID and the UP F-SEID may identify one session, or it may be understood as that a pair of the user plane F-SEID and the control plane F-SEID may identify one session.

In this application, the PFCP session message includes a PFCP header and one or more IEs. The IE may include the CP F-SEID #1. The IE may alternatively be one or more of creating a data packet detection rule, creating a QoS enforcement rule, and creating a QoS enforcement rule. For example, the PFCP session message may be a PFCP session establishment message (namely, PFCP session establishment message). For another example, the PFCP session message may be a PFCP session modification message (namely, PFCP session modification). For still another example, the PFCP session message may be a PFCP session deletion request message (namely, PFCP session deletion request message). In this application, a specific name of the PFCP session message is not limited. For details, refer to chapter 7.3 in TS 29.244.

In this application, the LLOF may provide the message forwarding service. For example, the service may be defined as Nllof_message_transfer. Specifically, the LLOF may further provide different message forwarding services for different types of non-service-oriented messages. For example, Nllof_PFCP message_transfer is defined to transmit the PFCP session message (to be specific, transmit the N4 message between the SMF and the UPF). For another example, the Nllof_NGAP message_transfer service is defined by the LLOF to transmit the NGAP message (to be specific, the N2 message between the NG-RAN and the AMF). For still another example, Nllof_GTP-C message_transfer is defined to transmit the GTP-C message (to be specific, the N26 message between the AMF and the MME). It may also be understood as that the LLOF has the capability of forwarding a message for the SMF, or the LLOF supports forwarding a message for the SMF. For example, the LLOF may forward the request message #2 for the SMF by using Nllof_PFCP message_transfer.

Optionally, if the LLOF may define different services for different types of non-service-oriented messages (for example, the LLOF defines an Nllof_PFCP message_transfer service, the Nllof_NGAP message_transfer service, and an Nllof_GTP-C message_transfer service), when the SMF #1 requests the LLOF to send a non-service-oriented message, the LLOF may determine a type of the non-service-oriented message based on a name of the request message #2. For example, if the message name of the request message #2 is Nllof_PFCP message_transfer, the LLOF may determine that the message is of an N4 interface message type. For another example, if the message name of the request message #2 is Nllof_NGAP message_transfer, the LLOF may determine that the message is of an N2 interface message type. For still another example, if the message name of the request message #2 is Nllof_GTP-C message_transfer, the LLOF may determine that the message is of an N26 interface message type.

Optionally, if the LLOF does not define different services for different types of non-service-oriented messages, for example, the LLOF uses an Nllof_message_transfer service to forward the request message #2 for the SMF. In this case, the request message #2 may carry indication information #1, and the indication information #1 indicates a type of the non-service-oriented message. For example, the indication information #1 is a message type field. For example, the indication information #1 may indicate that the non-service-oriented message is of an N2 interface message type. For another example, the indication information #1 may indicate that the non-service-oriented message is of an N4 interface message type. For still another example, the indication information #1 may indicate that the non-service-oriented message is of an N26 interface message type.

Step 805: The LLOF parses the request message #2, and encapsulates the PFCP session message.

For example, sequential encapsulation may be performed on the PFCP session message based on the protocol stack shown in FIG. 3. To be specific, UDP header encapsulation and IP header encapsulation are performed on the PFCP session message in sequence. For example, the LLOF encapsulates the PFCP header into the IE, to obtain the PFCP session message. Then, the UDP layer may continue to encapsulate the PFCP session message by using a UDP header. A source port of the UDP may be a UDP port number allocated by the LLOF, for example, a UDP port number #1. A destination port of the UDP is a port number #8805. Then, the IP layer may encapsulate a message of the UDP layer by using an IP header. A source IP address of the IP header is an IP address of the LLOF, and a destination IP address of the IP header is an IP address of the UPF #1.

Step 806: The LLOF sends an encapsulated PFCP session message to the UPF #1. Correspondingly, the UPF #1 receives the encapsulated PFCP session message.

For example, the LLOF may determine, based on the information about the UPF (for example, the address information of the UPF and/or the parameter information of the UPF), that the target UPF is the UPF #1, and send the encapsulated PFCP session message to the UPF #1. A destination address in the encapsulated PFCP session message is the IP address of the UPF #1.

Step 807: The UPF #1 parses the encapsulated PFCP session message, and allocates the UP F-SEID.

For example, the UPF #1 may first parse the IP header, then parse the UDP header, and finally parse the PFCP header and the IE. In addition, the UPF #1 may allocate a UP F-SEID #8 based on a name of the PFCP session message.

It is assumed that the UPF #1 accepts the IE (to be specific, various N4 rules (N4 rules) in the PFCP session message) in the PFCP session message. In this case, the UPF #1 may store the CP F-SEID #1 and the N4 rules that are included in the PFCP session message, and send a response message to the LLOF, where the response message includes "success" indication information. If the UPF #1 accepts only some of the N4 rules, or if the UPF #1 accepts no N4 rule, the response message sent by the UPF #1 to the LLOF includes "error cause" (which may also be understood as "cause value") indication information. In other words, the response message sent by the UPF #1 to the LLOF includes indication information #2, and the indication information is a response to the PFCP session message. For example, the indication information may be rejection "cause value" indication information or the "success" indication information.

For example, the response message may alternatively be first encapsulated into the PFCP session message, and the PFCP session message includes a PFCP session message header and one or more IEs.

For the case (1), in a possible implementation, the PFCP message header may include the SEID #1. In another possible implementation, the PFCP session message header may include the CP F-SEID #1, and the IE of the PFCP session message includes the UP F-SEID.

For the case (2), in a possible implementation, the UPF #1 may encapsulate the UP F-SEID #8 and the CP F-SEID #2 into the IE. In another possible implementation, the PFCP message header may include the SEID #2, and the IE of the PFCP session message may include the UP F-SEID #8. In still another possible implementation, the PFCP session message header may include the CP F-SEID #2, and the IE of the PFCP session message may include the UP F-SEID #8.

Then, the PFCP session message is encapsulated by using the UDP header. For example, a port number of a source port of the UDP header is a port number #8805, and a port number of a destination port of the UDP is a port number #1. Then, the IP header is used for encapsulation. For example, a source IP address of the IP header is an IP address of the UPF, and a destination IP address of the IP header is an IP address of the LLOF.

Step 808: The UPF #1 sends an encapsulated response message #2 to the LLOF. Correspondingly, the LLOF receives the response message #2.

Step 809: The LLOF parses the response message #2 to obtain the CP F-SEID #1, and determines a corresponding SMF based on the stored correspondence between the SMF and the CP F-SEID.

For example, the LLOF may parse the IP header, the UDP header, and the PFCP header in sequence. In a possible implementation, the SEID #1 is obtained after the PFCP session message header is successfully parsed. As described above, the LLOF may obtain the CP F-SEID #1 based on the SEID #1 and the IP address of the LLOF. As described in step 801, because the LLOF stores the correspondence between the SMF and the CP F-SEID, the LLOF may determine, based on the correspondence, that a target SMF is the SMF #1.

Step 810: The LLOF sends a response message #3 to the SMF #1.

In this application, the LLOF may provide the message forwarding service. For example, the LLOF may send the response message #3 to the SMF #1 based on an Nllof_ Message _Notify service. The response message #3 carries the indication information #2 and the UP F-SEID #8.

For example, the response message #3 may be a message in an HTTP format. Alternatively, it may also be understood as that the response message #3 may be transmitted by using a service-oriented interface protocol.

It is assumed that step 801 to step 810 are understood as an N4 session establishment process, in other words, the PFCP session message is a PFCP session establishment message. In this case, the following step 811 to step 815 may be understood as an N4 session modification process or an N4 session release process.

Optionally, in step 811, the SMF sends an N4 session modification request message #1 to the LLOF. Correspondingly, the LLOF receives the session modification request message #1 from the SMF.

For example, the N4 session modification request message #1 may be a PFCP session modification message. A PFCP session modification message header includes the UP F-SEID #8. For example, an IE of the PFCP session modification message may be some update rules of an N4 session message.

For example, the N4 session modification request message #1 may be transmitted through the service-oriented interface. Specifically, the N4 session modification request message #1 may be encapsulated into a message in an HHTP format.

Optionally, in step 812, the LLOF determines the target UPF based on the N4 session modification request message #1.

For example, the LLOF may determine, based on the UP F-SEID #8 included in the PFCP session modification message header, that the target UPF is the UPF #1.

Optionally, in step 813, the LLOF sends an N4 session modification request message #2 to the UPF #1. Correspondingly, the UPF #1 receives the session modification request message #2 from the LLOF.

For example, the session modification request message #2 is a PFCP session modification message. For example, an IE of the PFCP session modification message may be some update rules of an N4 session message. Optionally, a PFCP session modification message header may include the CP F-SEID #1.

For example, the LLOF may send the N4 session modification request message to the UPF #1 through an N4 interface.

Optionally, in step 814, the UPF #1 sends a session modification response message #1 to the LLOF. Correspondingly, the LLOF receives the session modification response message #1.

It is assumed that the UPF #1 accepts an IE (to be specific, various N4 rules (N4 rules) in the PFCP session modification message) in the session modification request message, and the UPF #1 may send a response message to the LLOF. The response message includes indication information #3. For example, if the UPF receives all the N4 rules in the IE, the indication information #3 may be "success" indication information. For another example, if the UPF #1 accepts only some of the N4 rules, or if the UPF #1 accepts no N4 rule, the response message sent by the UPF #1 to the LLOF includes "error cause" (which may also be understood as "cause value") indication information.

For example, the session modification response message includes the PFCP session modification message header and one or more IEs. In a possible implementation, the PFCP message header may include the SEID #1 allocated by the LLOF to the SMF. In another possible implementation, the PFCP message header may include the CP F-SEID #1 allocated by the LLOF to the SMF. Information carried in the response message herein is consistent with that carried in a session establishment response message, and processing after the LLOF receives the response messages is also consistent.

Optionally, in step 815, the LLOF parses the session modification response message #1 to obtain the CP F-SEID #1, and determines a corresponding SMF based on the stored correspondence between the SMF and the CP F-SEID.

For example, the LLOF may parse the IP header, the UDP header, and the PFCP header in sequence. The SEID #1 is obtained after the PFCP session modification message header is successfully parsed. As described above, the LLOF may obtain the CP F-SEID #1 based on the SEID #1 and the IP address of the LLOF. As described in step 801, because the LLOF stores the correspondence between the SMF and the CP F-SEID, the LLOF may determine, based on the correspondence, that the target SMF is the SMF #1.

Optionally, in step 816, the LLOF sends a session modification response message to the SMF #1.

In this application, the LLOF may provide the message forwarding service. For example, the LLOF may send the session modification response message to the SMF #1 based on the Nllof_Message _Notify service.

It should be noted that in this application, messages such as Nllof_message_transfer and Nllof_Fseid_allocation are examples of message names. This is not limited.

Based on the foregoing technical solutions, this application provides a new network service-oriented architecture including the LLOF. A message may be transmitted between the LLOF and the SMF through the service-oriented interface, so that the SMF is completely service-oriented. In addition, the LLOF may provide services such as CP F-SEID allocation and message forwarding, to ensure communication between the SMF and the UPF. In addition, because the session context information is stored on the LLOF, when the SMF is faulty, the LLOF may further quickly select a new SMF, transmit session context to the newly selected SMF, and provide a service for a session, thereby reducing a communication delay and ensuring user service experience.

It may be understood that the examples in the method 700 and the method 800 in embodiments of this application are merely intended to help a person skilled in the art understand embodiments of this application, but are not intended to limit embodiments of this application to specific scenarios in the examples.

It may be further understood that some optional features in embodiments of this application may be independent of other features in some scenarios, or may be combined with other features in some scenarios.

It should be understood that "pre-define" in this application may be understood as "define", "pre-define", "store", "pre-store", "pre-negotiate", "pre-configure", "build into", or "pre-burn".

It may be understood that in this application, both "when" and "if" mean that an apparatus performs corresponding processing in an objective situation, and are not intended to limit time. The terms do not require that the apparatus is required to have a determining action during implementation, and do not mean any other limitation.

It may be understood that "and/or" in this specification describes an association relationship between associated objects, and represents that three relationships may exist. For example, A and/or B may represent the following cases: Only A exists, both A and B exist, and only B exists, where A and B may be singular or plural. In the text descriptions of this application, the character "/" generally indicates an "or" relationship between the associated objects. In a formula in this application, the character "/" indicates a "division" relationship between the associated objects.

The foregoing mainly describes the solutions provided in embodiments of this application from a perspective of interaction between nodes. It may be understood that, to implement the foregoing functions, each node, for example, the link load orchestration function network element, the session management function network element, and the user plane function network element, includes a corresponding hardware structure and/or software module for performing each function. A person skilled in the art should be able to be aware that, in this application, units and algorithm steps of the examples described with reference to embodiments disclosed in this specification can be implemented by hardware or a combination of hardware and computer software. Whether a function is performed by the hardware or hardware driven by computer software depends on particular applications and design constraints of the technical solutions. A person skilled in the art may use different methods to implement the described functions for each particular application, but it should not be considered that the implementation goes beyond the scope of this application.

It may be understood that, to implement functions in the foregoing embodiments, the link load orchestration function network element includes a corresponding hardware structure and/or software module for performing each function. A person skilled in the art should be easily aware that, in this application, the units and method steps in the examples described with reference to embodiments disclosed in this application can be implemented by hardware or a combination of hardware and computer software. Whether a function is performed by the hardware or hardware driven by computer software depends on particular application scenarios and design constraints of the technical solutions.

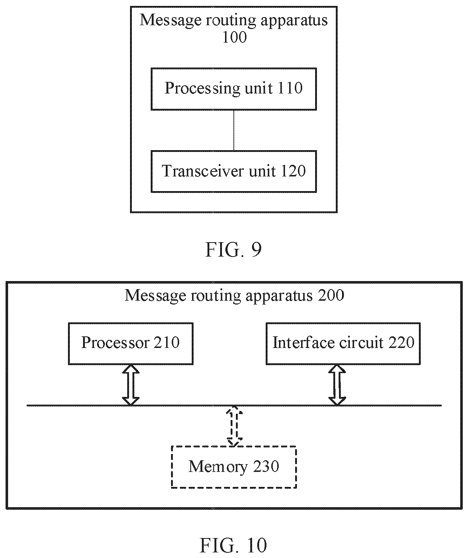

FIG. 9 and FIG. 10 are diagrams of structures of possible message routing apparatuses according to embodiments of this application. These message routing apparatuses may be configured to implement functions of the link load orchestration function network element in the foregoing method embodiments, and therefore can also implement beneficial effects of the foregoing method embodiments.

As shown in FIG. 9, the message routing apparatus 100 includes a processing unit 110 and a transceiver unit 120. The message routing apparatus 100 is configured to implement functions of the link load orchestration function network element in the method embodiment shown in FIG. 8.

When the message routing apparatus 100 is configured to implement the functions of the link load orchestration function network element in the method embodiment shown in FIG. 8, the transceiver unit 120 is configured to receive a first message from a session management function network element, where the first message carries information about a user plane function network element and a session message, the first message is for requesting to forward the session message, and the first message is transmitted through a service-oriented interface of the apparatus. The processing unit 110 is configured to determine a target user plane function network element based on the information about the user plane function network element. The transceiver unit 120 is further configured to send the session message to the target user plane function network element through a non-service-oriented interface.

In a possible implementation, the transceiver unit 120 is configured to receive a second message from the session management function network element, where the second message is for requesting to obtain a CP F-SEID corresponding to the session management function network element. The processing unit 110 is configured to allocate the corresponding CP F-SEID to the session management function network element based on the second message. The transceiver unit 120 is configured to send the CP F-SEID to the session management function network element.

In a possible implementation, the processing unit 110 is configured to allocate a corresponding control plane fully qualified session endpoint identifier CP F-SEID to the session management function network element based on the first message, and the processing unit 110 is configured to encapsulate the CP F-SEID into an information element IE of the session message.

In a possible implementation, the processing unit 110 is configured to store a mapping relationship between the session management function network element and the CP F-SEID.

In a possible implementation, the processing unit 110 is configured to encapsulate the session message. That the transceiver unit 120 sends the session message to the target user plane function network element includes: The transceiver unit 120 is configured to send an encapsulated session message to the target user plane function network element.

In a possible implementation, the transceiver unit 120 is configured to receive a third message from the target user plane function network element, where the third message carries a session endpoint identifier SEID, a user plane fully qualified session endpoint identifier UP F-SEID, and indication information, and the indication information is for responding to the session message. The processing unit 110 is configured to determine the CP F-SEID based on the SEID. The processing unit 110 controls, based on the mapping relationship between the CP F-SEID and the session management function network element, the transceiver unit 120 to send a fourth message to the session management function network element, where the fourth message carries the UP F-SEID and the indication information.

For more detailed descriptions about the processing unit 110 and the transceiver unit 120, directly refer to related descriptions in the method embodiment shown in FIG. 8. Details are not described herein again.

As shown in FIG. 10, the message routing apparatus 200 includes a processor 210 and an interface circuit 220. The processor 210 is coupled to the interface circuit 220. It may be understood that the interface circuit 220 may be a transceiver or an input/output interface. Optionally, the message routing apparatus 200 may further include a memory 230, configured to: store instructions executed by the processor 210, store input data required by the processor 210 to run the instructions, or store data generated after the processor 210 runs the instructions.

When the message routing apparatus 200 is configured to implement the method shown in FIG. 8, the processor 210 is configured to implement a function of the processing unit 110, and the interface circuit 220 is configured to implement a function of the transceiver unit 120.

It should be understood that the processor shown in FIG. 10 may include at least one processor, and the interface circuit may also include a plurality of interface circuits.

For explanations and beneficial effects of related content of any one of the apparatuses provided above, refer to the corresponding method embodiment provided above. Details are not described herein again.

It may be understood that the processor in embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor, or may be any conventional processor.

According to the methods provided in embodiments of this application, this application further provides a computer program product, not covered by the scope of the claims. The computer program product stores computer program code. When the computer program code is run on a computer, the computer is enabled to perform the methods performed by the link load orchestration function network element in embodiments of the method 700 and the method 800.

According to the methods provided in embodiments of this application, this application further provides a computer-readable storage medium. The computer-readable medium stores program code. When the program code is run on a computer, the computer is enabled to perform the methods performed by the link load orchestration function network element in the method 700 and the method 800 in the foregoing embodiments.

According to the methods provided in embodiments of this application, this application further provides a communication system. The communication system includes a terminal and a network device. The terminal is configured to perform the steps corresponding to the link load orchestration function network element in the method 700 and the method 800.

Optionally, the communication system may further include a user plane function network element and a session management function network element.

The steps of the methods in embodiments of this application may be implemented in hardware, or may be implemented in software instructions that can be executed by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk drive, a removable hard disk, a CD-ROM, or any other form of storage medium well-known in the art. For example, the storage medium is coupled to a processor, so that the processor can read information from the storage medium and write information into the storage medium. The storage medium may alternatively be a component of the processor. The processor and the storage medium may be disposed in an ASIC. In addition, the ASIC may be located in the link load orchestration function network element. The processor and the storage medium may also exist in the link load orchestration function network element as discrete components.

All or some of the foregoing embodiments may be implemented by using software, hardware, firmware, or any combination thereof. When software is used to implement embodiments, all or some of embodiments may be implemented in a form of a computer program product. The computer program product includes one or more computer programs or instructions. When the computer programs or the instructions are loaded and executed on a computer, all or some of the procedures or functions in embodiments of this application are executed. The computer may be a general-purpose computer, a dedicated computer, a computer network, a network device, user equipment, or another programmable apparatus. The computer program or instructions may be stored in a computer-readable storage medium, or may be transmitted from a computer-readable storage medium to another computer-readable storage medium. For example, the computer program or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk drive, or a magnetic tape; or may be an optical medium, for example, a digital video disc; or may be a semiconductor medium, for example, a solid-state drive. The computer-readable storage medium may be a volatile or non-volatile storage medium, or may include both a volatile storage medium and a non-volatile storage medium.

It may be understood that various numbers in embodiments of this application are merely used for differentiation for ease of description, and are not used to limit the scope of embodiments of this application. Sequence numbers of the foregoing processes do not mean execution sequences. The execution sequences of the processes should be determined based on functions and internal logic of the processes.

## Claims

1. A message routing method, comprising:
receiving (701), by a link load orchestration function network element, a first message from a session management function network element, wherein the first message carries information about a user plane function network element and a session message, the first message is for requesting to forward the session message, and the first message is transmitted through a service-oriented interface of the link load orchestration function network element;
determining (702), by the link load orchestration function network element, a target user plane function network element based on the information about the user plane function network element; and
sending (703), by the link load orchestration function network element, the session message to the target user plane function network element through a non-service-oriented interface.

2. The method according to claim 1, wherein the session message is a packet forwarding control protocol PFCP session message.

3. The method according to claim 1 or 2, wherein the session message comprises an information element IE, and the IE comprises a control plane fully qualified session endpoint identifier CP F-SEID corresponding to the session management function network element.

4. The method according to claim 3, wherein before the receiving, by a link load orchestration function network element, a first message from a session management function network element, the method further comprises:
receiving, by the link load orchestration function network element, a second message from the session management function network element, wherein the second message is for requesting to obtain the CP F-SEID corresponding to the session management function network element;
allocating, by the link load orchestration function network element, the corresponding CP F-SEID to the session management function network element based on the second message; and
sending, by the link load orchestration function network element, the CP F-SEID to the session management function network element.

5. The method according to claim 3, wherein the CP F-SEID is allocated by the session management function network element.

6. The method according to claim 1 or 2, wherein the method further comprises:
allocating, by the link load orchestration function network element, a corresponding control plane fully qualified session endpoint identifier CP F-SEID to the session management function network element based on the first message; and
encapsulating, by the link load orchestration function network element, the CP F-SEID into an information element IE of the session message.

7. The method according to any one of claims 3 to 6, wherein the method further comprises:
storing, by the link load orchestration function network element, a mapping relationship between the session management function network element and the CP F-SEID.

8. The method according to claim 7, wherein the method further comprises:
encapsulating, by the link load orchestration function network element, the session message; and
the sending, by the link load orchestration function network element, the session message to the target user plane function network element comprises:
sending, by the link load orchestration function network element, an encapsulated session message to the target user plane function network element.

9. The method according to claim 8, wherein the method further comprises:
receiving, by the link load orchestration function network element, a third message from the target user plane function network element, wherein the third message carries a session endpoint identifier SEID, a user plane fully qualified session endpoint identifier UP F-SEID, and indication information, and the indication information is for responding to the session message;
determining, by the link load orchestration function network element, the CP F-SEID based on the SEID; and
sending, by the link load orchestration function network element, a fourth message to the session management function network element based on the mapping relationship between the CP F-SEID and the session management function network element, wherein the fourth message carries the UP F-SEID and the indication information.

10. The method according to claim 9, wherein
a header of the third message comprises the SEID, and an IE of the third message comprises the UP F-SEID.

11. The method according to claim 7, wherein the method further comprises:
receiving, by the link load orchestration function network element, a third message from the target user plane function network element, wherein an IE of the third message comprises a UP F-SEID, the CP F-SEID, and indication information, and the indication information is for responding to the session message; and
sending, by the link load orchestration function network element, a fourth message to the session management function network element based on the mapping relationship between the CP F-SEID and the session management function network element, wherein the fourth message carries the UP F-SEID and the indication information.

12. A message routing apparatus, comprising a module configured to perform the method according to any one of claims 1 to 11.

13. A message routing apparatus, comprising a processor, wherein the processor is coupled to a memory, the memory is configured to store instructions, and when the instructions are executed by the processor, the apparatus is enabled to perform the method according to any one of claims 1 to 11.

14. A computer-readable storage medium, wherein the storage medium stores instructions, and when the instructions are executed by a communication apparatus, the method according to any one of claims 1 to 11 is implemented.

15. A communication system, comprising at least one apparatus configured to perform the method according to any one of claims 1 to 11.

16. The communication system according to claim 15, wherein the communication system further comprises a session management function network element and a user plane function network element.

## Patentansprüche

1. Nachrichtenvermittlungsverfahren, umfassend:
Empfangen (701), durch ein Netzelement mit Link-Load-Orchestrierungsfunktion, einer ersten Nachricht von einem Netzelement mit Sitzungsverwaltungsfunktion, wobei die erste Nachricht Informationen über ein Netzelement mit Benutzerebenenfunktion und eine Sitzungsnachricht enthält, die erste Nachricht zum Anfordern, die Sitzungsnachricht weiterzuleiten, dient und die erste Nachricht über eine dienstorientierte Schnittstelle des Netzelements mit Link-Load-Orchestrierungsfunktion übertragen wird;
Bestimmen (702), durch das Netzelement mit Link-Load-Orchestrierungsfunktion, eines Netzelementes mit Ziel-Benutzerebenenfunktion basierend auf den Informationen über das Netzelement mit Benutzerebenenfunktion; und
Senden (703), durch das Netzelement mit Link-Load-Orchestrierungsfunktion, der Sitzungsnachricht an das Netzelement mit Ziel-Benutzerebenenfunktion über eine nichtdienstorientierte Schnittstelle.

2. Verfahren nach Anspruch 1, wobei es sich bei der Sitzungsnachricht um eine Paketweiterleitungssteuerungsprotokoll-Sitzungsnachricht, PFCP-Sitzungsnachricht, handelt.

3. Verfahren nach Anspruch 1 oder 2, wobei die Sitzungsnachricht ein Informationselement, IE, umfasst und das IE eine vollständig qualifizierte Sitzungsendpunktkennung einer Steuerungsebene, CP F-SEID, umfasst, die dem Netzelement mit Sitzungsverwaltungsfunktion entspricht.

4. Verfahren nach Anspruch 3, wobei das Verfahren vor dem Empfangen, durch ein Netzelement mit Link-Load-Orchestrierungsfunktion, einer ersten Nachricht von einem Netzelement mit Sitzungsverwaltungsfunktion ferner Folgendes umfasst:
Empfangen, durch das Netzelement mit Link-Load-Orchestrierungsfunktion, einer zweiten Nachricht von dem Netzelement mit Sitzungsverwaltungsfunktion, wobei die zweite Nachricht zum Anfordern, die CP F-SEID zu erlangen, die dem Netzelement mit Sitzungsverwaltungsfunktion entspricht, dient;
Zuweisen, durch das Netzelement mit Link-Load-Orchestrierungsfunktion, der entsprechenden CP F-SEID an das Netzelement mit Sitzungsverwaltungsfunktion basierend auf der zweiten Nachricht; und
Senden, durch das Netzelement mit Link-Load-Orchestrierungsfunktion, der CP F-SEID an das Netzelement mit Sitzungsverwaltungsfunktion.

5. Verfahren nach Anspruch 3, wobei die CP F-SEID durch das Netzelement mit Sitzungsverwaltungsfunktion zugewiesen wird.

6. Verfahren nach Anspruch 1 oder 2, wobei das Verfahren ferner Folgendes umfasst:
Zuweisen, durch das Netzelement mit Link-Last-Orchestrierungsfunktion, einer entsprechenden vollständig qualifizierten Sitzungsendpunktkennung einer Steuerungsebene, CP F-SEID, zu dem Netzelement mit Sitzungsverwaltungsfunktion basierend auf der ersten Nachricht; und
Kapseln, durch das Netzelement mit Link-Last-Orchestrierungsfunktion, der CP F-SEID in ein Informationselement, IE, der Sitzungsnachricht.

7. Verfahren nach einem der Ansprüche 3 bis 6, wobei das Verfahren ferner Folgendes umfasst:
Speichern, durch das Netzelement mit Link-Last-Orchestrierungsfunktion, einer Zuordnungsbeziehung zwischen dem Netzelement mit Sitzungsverwaltungsfunktion und dem CP F-SEID.

8. Verfahren nach Anspruch 7, wobei das Verfahren ferner Folgendes umfasst:
Kapseln, durch das Netzelement mit Link-Last-Orchestrierungsfunktion, der Sitzungsnachricht; und
das Senden, durch das Netzelement mit Link-Last-Orchestrierungsfunktion, der Sitzungsnachricht an das Netzelement mit Ziel-Benutzerebenenfunktion Folgendes umfasst: Senden, durch das Netzelement mit Link-Last-Orchestrierungsfunktion, einer gekapselten Sitzungsnachricht an das Netzelement mit Ziel-Benutzerebenenfunktion.

9. Verfahren nach Anspruch 8, wobei das Verfahren ferner Folgendes umfasst:
Empfangen, durch das Netzelement mit Link-Last-Orchestrierungsfunktion, einer dritten Nachricht von dem Netzelement mit Ziel-Benutzerebenenfunktion, wobei die dritte Nachricht eine Sitzungsendpunktkennung, SEID, eine vollständig qualifizierte Sitzungsendpunktkennung einer Benutzerebene, UP F-SEID, und Angabeinformationen enthält, wobei die Angabeinformationen zum Beantworten der Sitzungsnachricht dienen;
Bestimmen, durch das Netzelement mit Link-Last-Orchestrierungsfunktion, der CP F-SEID basierend auf der SEID; und
Senden, durch das Netzelement mit Link-Last-Orchestrierungsfunktion, einer vierten Nachricht an das Netzelement mit Sitzungsverwaltungsfunktion basierend auf der Zuordnungsbeziehung zwischen der CP F-SEID und dem Netzelement mit Sitzungsverwaltungsfunktion, wobei die vierte Nachricht die UP F-SEID und die Angabeinformationen enthält.

10. Verfahren nach Anspruch 9, wobei
ein Header der dritten Nachricht die SEID umfasst und das IE der dritten Nachricht die UP F-SEID umfasst.

11. Verfahren nach Anspruch 7, wobei das Verfahren ferner Folgendes umfasst:
Empfangen, durch das Netzelement mit Link-Last-Orchestrierungsfunktion, einer dritten Nachricht von dem Netzelement mit Ziel-Benutzerebenenfunktion, wobei ein IE der dritten Nachricht eine UP-F-SEID, die CP-F-SEID und Angabeinformationen umfasst und die Angabeinformationen zum Beantworten der Sitzungsnachricht dienen; und
Senden, durch das Netzelement mit Link-Last-Orchestrierungsfunktion, einer vierten Nachricht an das Netzelement mit Sitzungsverwaltungsfunktion basierend auf der Zuordnungsbeziehung zwischen der CP F-SEID und dem Netzelement mit Sitzungsverwaltungsfunktion, wobei die vierte Nachricht die UP F-SEID und die Angabeinformationen enthält.

12. Nachrichtenvermittlungsvorrichtung, umfassend ein Modul, das dazu konfiguriert ist, das Verfahren nach einem der Ansprüche 1 bis 11 durchzuführen.

13. Nachrichtenvermittlungsvorrichtung, umfassend einen Prozessor, wobei der Prozessor mit einem Speicher gekoppelt ist, der Speicher dazu konfiguriert ist, Anweisungen zu speichern, und, wenn die Anweisungen durch den Prozessor ausgeführt werden, die Vorrichtung in die Lage versetzt wird, das Verfahren nach einem der Ansprüche 1 bis 11 durchzuführen.

14. Computerlesbares Speichermedium, wobei das Speichermedium Anweisungen speichert und, wenn die Anweisungen durch eine Kommunikationsvorrichtung ausgeführt werden, das Verfahren nach einem der Ansprüche 1 bis 11 umgesetzt wird.

15. Kommunikationssystem, umfassend mindestens eine Vorrichtung, die dazu konfiguriert sind, das Verfahren nach einem der Ansprüche 1 bis 11 durchzuführen.

16. Kommunikationssystem nach Anspruch 15, wobei das Kommunikationssystem ferner ein Netzelement mit Sitzungsverwaltungsfunktion und ein Netzelement mit Benutzerebenenfunktion umfasst.

## Revendications

1. Procédé de routage de message, comprenant :
la réception (701), par un élément de réseau de fonction d'orchestration de charge de liaison, d'un premier message provenant d'un élément de réseau de fonction de gestion de session, dans lequel le premier message transporte des informations sur un élément de réseau de fonction de plan utilisateur et un message de session, le premier message ayant pour but de demander le transfert du message de session, et le premier message est transmis via une interface orientée service de l'élément de réseau de fonction d'orchestration de charge de liaison ;
la détermination (702), par l'élément de réseau de fonction d'orchestration de charge de liaison, d'un élément de réseau de fonction de plan utilisateur cible sur la base des informations relatives à l'élément de réseau de fonction de plan utilisateur ; et
l'envoi (703), par l'élément de réseau de fonction d'orchestration de charge de liaison, du message de session à l'élément de réseau de fonction de plan utilisateur cible via une interface non orientée service.

2. Procédé selon la revendication 1, dans lequel le message de session est un message de session du protocole de contrôle de transfert de paquets, PFCP.

3. Procédé selon la revendication 1 ou 2, dans lequel le message de session comprend un élément d'information, IE, et l'IE comprend un identifiant de point terminal de session pleinement qualifié du plan de contrôle, CP F-SEID, correspondant à l'élément de réseau de fonction de gestion de session.

4. Procédé selon la revendication 3, dans lequel avant la réception, par un élément de réseau de fonction d'orchestration de charge de liaison, d'un premier message provenant d'un élément de réseau de fonction de gestion de session, le procédé comprend en outre :
la réception, par l'élément de réseau de fonction d'orchestration de charge de liaison, d'un deuxième message provenant de l'élément de réseau de fonction de gestion de session, dans lequel le deuxième message a pour but de demander l'obtention du CP F-SEID correspondant à l'élément de réseau de fonction de gestion de session ;
l'attribution, par l'élément de réseau de fonction d'orchestration de charge de liaison, du CP F-SEID correspondant à l'élément de réseau de fonction de gestion de session sur la base du deuxième message ; et
l'envoi, par l'élément de réseau de fonction d'orchestration de charge de liaison, du CP F-SEID à l'élément de réseau de fonction de gestion de session.

5. Procédé selon la revendication 3, dans lequel le CP F-SEID est attribué par l'élément de réseau de fonction de gestion de session.

6. Procédé selon la revendication 1 ou 2, dans lequel le procédé comprend en outre :
l'attribution, par l'élément de réseau de fonction d'orchestration de charge de liaison, d'un identifiant de point terminal de session pleinement qualifié du plan de contrôle, CP F-SEID, correspondant à l'élément de réseau de fonction de gestion de session sur la base du premier message ; et
l'encapsulation, par l'élément de réseau de fonction d'orchestration de charge de liaison, du CP F-SEID dans un élément d'information, IE, du message de session.

7. Procédé selon l'une quelconque des revendications 3 à 6, dans lequel le procédé comprend en outre :
le stockage, par l'élément de réseau de fonction d'orchestration de charge de liaison, d'une relation de mappage entre l'élément de réseau de fonction de gestion de session et le CP F-SEID.

8. Procédé selon la revendication 7, dans lequel le procédé comprend en outre :
l'encapsulation, par l'élément de réseau de fonction d'orchestration de charge de liaison, du message de session ; et
l'envoi, par l'élément de réseau de fonction d'orchestration de charge de liaison, du message de session à l'élément de réseau de fonction de plan utilisateur cible comprend :
l'envoi, par l'élément de réseau de fonction d'orchestration de charge de liaison, d'un message de session encapsulé à l'élément de réseau de fonction de plan utilisateur cible.

9. Procédé selon la revendication 8, dans lequel le procédé comprend en outre :
la réception, par l'élément de réseau de fonction d'orchestration de charge de liaison, d'un troisième message provenant de l'élément de réseau de fonction de plan utilisateur cible, dans lequel le troisième message transporte un identifiant de point terminal de session, SEID, un identifiant de point terminal de session pleinement qualifié du plan utilisateur UP F-SEID et des informations d'indication, et les informations d'indication ont pour but de répondre au message de session ;
la détermination, par l'élément de réseau de fonction d'orchestration de charge de liaison, du CP F-SEID sur la base du SEID ; et
l'envoi, par l'élément de réseau de fonction d'orchestration de charge de liaison, d'un quatrième message à l'élément de réseau de fonction de gestion de session sur la base de la relation de mappage entre le CP F-SEID et l'élément de réseau de fonction de gestion de session, dans lequel le quatrième message transporte l'UP F-SEID et les informations d'indication.

10. Procédé selon la revendication 9, dans lequel l'en-tête du troisième message comprend le SEID, et un IE du troisième message comprend l'UP F-SEID.

11. Procédé selon la revendication 7, dans lequel le procédé comprend en outre :
la réception, par l'élément de réseau de fonction d'orchestration de charge de liaison, d'un troisième message provenant de l'élément de réseau de fonction de plan utilisateur cible, dans lequel un IE du troisième message comprend un UP F-SEID, le CP F-SEID et des informations d'indication, et les informations d'indication ayant pour but de répondre au message de session ; et
l'envoi, par l'élément de réseau de fonction d'orchestration de charge de liaison, d'un quatrième message à l'élément de réseau de fonction de gestion de session sur la base de la relation de mappage entre le CP F-SEID et l'élément de réseau de fonction de gestion de session, dans lequel le quatrième message transporte l'UP F-SEID et les informations d'indication.

12. Appareil de routage de message, comprenant un module configuré pour réaliser le procédé selon l'une quelconque des revendications 1 à 11.

13. Appareil de routage de message, comprenant un processeur, dans lequel le processeur est couplé à une mémoire, la mémoire est configurée pour stocker des instructions, et lorsque les instructions sont exécutées par le processeur, l'appareil est activé pour réaliser le procédé selon l'une quelconque des revendications 1 à 11.

14. Support de stockage lisible par ordinateur, dans lequel le support de stockage stocke des instructions informatiques, et lorsque les instructions sont exécutées par un appareil de communication, le procédé selon l'une quelconque des revendications 1 à 11 est mis en œuvre.

15. Système de communication, comprenant au moins un appareil configuré pour réaliser le procédé selon l'une quelconque des revendications 1 à 11.

16. Système de communication selon la revendication 15, dans lequel le système de communication comprend en outre un élément de réseau de fonction de gestion de session et un élément de réseau de fonction de plan utilisateur.
